# EUROPEAN PATENT APPLICATION

(11) **EP 1 816 491 A1**
(43) Date of publication of application: **08.08.2007**
(21) Application number: 06356011.4
(22) Date of filing: 01.02.2006
(51) Int. Cl.: G02B 3/14

(54) **Electrowetting device**

(71) Applicant: Varioptic, 69007 Lyon (FR)
(72) Inventor: Maillard, Mathieu, 69002 Lyon (FR); Liogier D'Ardhuy, Gaëtan, 69007 Lyon (FR); Legrand, Julien, 69002 Lyon (FR); Berge, Bruno, 69002 Lyon (FR)
(74) Representative: Colombet, Alain André

(57) **Abstract**

An electrowetting device comprising a conductive fluid (101) and a non-conductive fluid (102), said fluids being non miscible, and an isolating substrate (103) on which both fluids are in contact and form a triple interface (104), wherein the natural contact angle (105) of the non-conductive fluid on the substrate in presence of the conductive fluid is comprised between 0° and about 20°. This device may be part of an electrowetting lens that is or is included in, a variable focus liquid lens, an optical diaphragm, an optical zoom, an ophthalmic device, an electrowetting aperture. An apparatus such as a camera, a cell phone, an endoscope or a dental video, comprising this electrowetting lens and a driver or electronic means for controlling the lens.

## Description

The invention relates to an electrowetting device. The invention also relates to an optical lens driven by electrowetting containing a device of the invention.

Optical lens driven by electrowetting and of variable focal length are described in European Patent EP-B1-1,166,157, the content of which is hereby incorporated herein by reference. A cell is defined by two transparent insulating plates and side walls. The lower plate, which is non-planar, comprises a conical or cylindrical depression or recess, which contains a drop of a non-conductive or insulating fluid. The remainder of the cell is filled with an electrically conductive fluid, non-miscible with the insulating fluid, having a different refractive index and substantially the same density. An annular electrode, which is open facing the recess, is positioned on the rear face of the lower plate. Another electrode is in contact with the conductive fluid. Through electrowetting phenomena it is possible to modify the curvature of the interface between the two fluids, according to the voltage V applied between the electrodes. Thus, a beam of light passing through the cell normal to the plates in the region of the drop will be focused to a greater or lesser extent according to the voltage applied. The conductive fluid generally is an aqueous fluid containing salts. The insulating fluid is typically an oil, an alkane or a mixture of alkanes, possibly halogenated.

The optical quality of an electrowetting device may vary in the conditions of use, depending on various parameters.

Importantly, the electrowetting devices may present a focal hysteresis, meaning that their optical powers differ depending on voltage ramp direction, increasing or decreasing. In other words, the focal length of the device at a given voltage value may be different depending on whether the tension is increasing or decreasing and the interface between the conductive and the non-conductive fluids is moving towards or inwards with respect to the drop central axis. It has been found that this phenomenon is related to contact angle hysteresis. It has finally been found that a degradation of the optical quality is associated with such a hysteresis.

One objective of the invention is to provide an electrowetting device having improved optical properties.

Another objective of the invention is to provide such a device having low or no focal and/or angle hysteresis.

Another objective of the invention is to provide such a device that is usable on a wide range of temperature while keeping its low or zero hysteresis properties.

Another objective is to provide such a device that keeps at least substantially unchanged its time response to electrical impulsion in either voltage ramp directions, increasing or decreasing, on a wide range of temperature.

Another objective is to provide such a device that keeps at least substantially unchanged its optical properties such as transparency on a wide range of temperature.

Still another objective is to provide such a device that can be used as a variable focus liquid lens, optical diaphragm, optical zoom and any other optical device using electrowetting in an inside or outside environment.

In one aspect the present invention relates to an electrowetting device comprising a conductive fluid and a non-conductive fluid, said fluids being non miscible, and an isolating substrate on which both fluids are in contact and form a triple interface, wherein the natural contact angle θₙ of the non-conductive fluid on the substrate in presence of the conductive fluid is comprised between 0° and about 20°, preferably above 0° and less or equal to about 20°, more preferably between about 5° and about 16°.

The embodiments of the invention may comprise one or several of the following features:
- a drop of non-conductive fluid is arranged on the substrate and a drop of conductive fluid is arranged above to cover the drop and the substrate;
- the fluids have substantially the same density and different optical indexes;
- the device comprises means for applying or allowing to apply an alternative tension on the conductive fluid;
- the isolating substrate has a recess to center the non-conductive fluid; the recess is preferably of circular section;
- the isolating substrate comprises or is made of a transparent material;
- the isolating substrate is made of, or is coated with, a material that is hydrophobic;
- the isolating substrate is made of, or is coated with, a material that is homogeneously wettable by the non-conductive fluid;
- this material has a surface energy that is compatible with the conductive and non-conductive fluids so as to provide a natural contact angle within the range according to the invention;
- the natural contact angle -and thus the choice of the nature of the substrate material and of the fluids is done by the one skilled in the art in this respect- is kept within the above recited range, over a range of temperature comprised between -10°C and +60°C, preferably between about -20°C and about +70°C;
- the device comprises electrodes, typically an electrode and a counter-electrode, in order to apply the tension on the conductive fluid;
- the triple interface is circular.

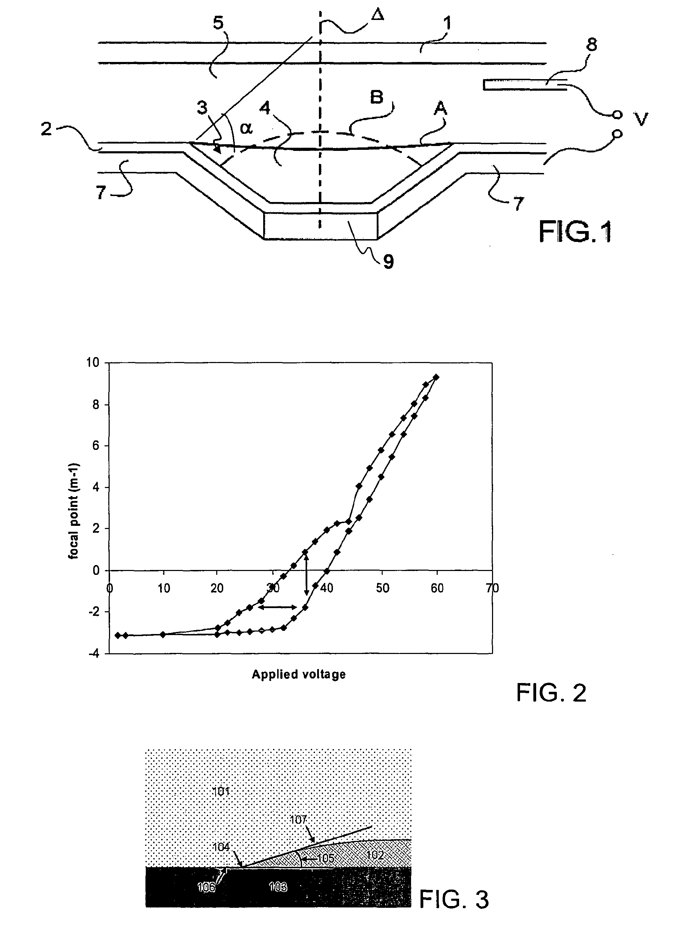

Referring to Figure 3, the natural contact angle θₙ (numerical reference 105) is the angle formed between the tangent to the planar substrate (106) and the tangent to the surface of the non-conductive fluid (107), both measured at the point of the triple interface (104), when no voltage is applied. As it will appear from the present specification, the substrate in the electrowetting device may be not planar and may rather present a recess to center the non-conductive fluid in the device. However, the natural contact angle according to the invention is the contact angle measured on a planar substrate made of the same material of the final device, with one fluid centered on the substrate and the other placed above. The raw natural contact angle may be measured at room temperature, say between about 20 and about 25°C. It may also be measured at various temperatures within the recited use temperature range.

Application of a voltage to the conductive fluid favors the wettability of the substrate by the conductive fluid. This leads to a deformation of the triple interface with changes of the contact angle of the non-conductive fluid, with respect to the substrate and of the radius of curvature of the fluid-fluid interface, and finally of the focal length.

With a natural contact angle within the recited range, the contact angle hysteresis and the focal hysteresis are kept low or equal to zero. Contact angle hysteresis may be regarded as the difference of contact angle of the non-conductive fluid on the substrate at a given voltage value between the increasing voltage ramp and the decreasing voltage ramp. According to a feature, the contact angle hysteresis is kept below a given value expressed as follows:
ΔCos θₙ = |cos θ₁ - cos θ₂| ≤about 0.06, preferably ≤about 0.04, more preferably ≤ about 0.02
wherein θ₁ and θ₂ are the angles formed between the tangent to the substrate and the tangent to the surface of the non-conductive fluid, measured at the point of the triple interface, for a same value of voltage, θ₁ being the value for the increasing voltage ramp direction and θ₂ for the decreasing voltage ramp direction.

According to a feature, the surface energy of the substrate material or coating material in contact with the fluids is chosen to be compatible with the nature of the fluids so as to give rise to a natural contact angle within the recited range.

In an advantageous feature, the non-conductive fluid includes a component having a surface tension close to the surface energy of the substrate material or coating material.

In another feature, the non-conductive fluid has a surface tension close to the surface energy of the substrate material or coating material.

In a preferred feature, the difference between the surface tension of the non-conductive or said non-conductive fluid component and the surface energy of the substrate material or coating material is ≤ ± about 15 mN/m (milliNewton / meter), preferably ≤ ± about 12 mN/m.

Surface energy includes a dispersive component and a polar component also called surface polarity. In a preferred feature, the substrate material or coating material has a low surface polarity or low polar component. Preferably, the substrate polar component is as low as possible, typically comprised between 0 and about 4 mN/m. More preferably, it is comprised between 0 and about 2 mN/m. The polar component may be measured as disclosed in F. M. Fowkes, A.C.S. Advances in chemistry series, 43, 99-111 (1964) and Arthur W. Adamson, Physical Chemistry of surfaces, Wiley fifth edition (1990).

In a feature, the substrate material or a substrate coating material has a surface energy above about 30 mN/m.

In another feature, the substrate material or a substrate coating material has a surface energy below about 30 mN/m.

The isolating substrate is made of an isolating material. This material is hydrophobic or is coated with an isolating and hydrophobic material. These materials are typically polymers.

The substrate material or coating material may be chosen among those materials:
- poly-para-xylylene linear polymers, such as those produced by vaporization of the dimer di-para-xylylene at 150°C, pyrolization of the dimer gas into a monomer of para-xylylene at 650-680°C, condensation and polymerization at room temperature (20-25°C) as a transparent polymer film. Examples include Parylene C obtained as described above, Parylene N that is similar to Parylene C except that a chlorine atom is substituted by a hydrogen atom and Parylene HT that is similar to Parylene N except that methyl group are replaced by fluorinated methyl groups. Deposition method is similar to Parylene C except temperature conditions.
- fluorinated polymers such as those commercialized by Dupont under the name Teflon^{®}, such as Teflon^{®} AF1601 and AF1600. They are solubilized in a fluorinated solvent such as FC40 or FC75 commercialized by 3M. The polymer solution is deposited by spin-coating or dip-coating and the polymer film is formed after solvent evaporation.
- Cyclotene® from Dow chemical. This polymer is spin-coated or dip-coated on a substrate and the polymer is formed by a baking process. Polymerization is thermally activated, it corresponds to the selective reaction between the vinyl group (C=C) and the cyclobutene group from two monomers.
- Cytop® from Asahi Glass Co. It is an amorphous fluorinated polymer similar to Teflon^{®} AF and solubilized in a fluorinated solvent. The polymer solution is deposited by spin-coating or dip-coating and the polymer film is formed after solvent evaporation.

In a feature, these polymers are used as coating on a substrate. This substrate can be made of any appropriate material like metal, polymer or inorganic material that isn't be degraded during the deposition process and that has the other properties necessitated by its use, for instance transparency in the region of the lens requiring transparency. Each material may be associated with a usual coupling agent, used to improve the substrate-coating adhesion. This coupling agent is deposited on the substrate prior to the coating process.

| **Material** | **Surface energy (mN/m)** | **Polar component (mN/m)** |
|---|---|---|
| Parylene C | 37 < γ < 45 | < 2 |
| Parylene N | 45 | < 2 (theoretical value) |
| Parylene F | | < 2 |
| Teflon^{®} AF1601 and AF1600 | 12 < γ < 15 | < 0.5 |
| Cyclotene® | 36 | <2 |
| Cytop® | 19 | < 1 |

In a feature, a non-conductive fluid containing a compound of surface tension equal or above, preferably above, about 28 mN/m is used with a substrate or coating made of Parylene or another material (e.g. Dow Cyclotene®) having such a high surface energy.

In another feature, a non-conductive fluid containing a compound of surface tension equal or below, preferably above, about 28 mN/m is used with a substrate or coating made of Teflon^{®} or another material (e.g. Cytop®) having such a low surface energy.

### The non-conductive fluid:

According to another feature, the non-conductive fluid comprises an organic or an inorganic (mineral) compound or mixture thereof. Examples of such organic or inorganic compounds include a Si-based monomer or oligomer, a Ge-based monomer or oligomer, a Si-Ge-based monomer or oligomer, a hydrocarbon, or a mixture thereof.

The hydrocarbon may be linear or branched and may contain one or more saturated, unsaturated or partially unsaturated cyclic moiety(ies). The hydrocarbon has advantageously from about 10 to about 35 carbon atoms, preferably from about 15 to about 35 carbon atoms. Hydrocarbons having less than about 10 carbon atoms are less preferred since miscibility into the conductive fluid may occur.

The hydrocarbon may comprise one or more insaturation(s) in the form of double and/or triple bond(s). More than 2 or 3 double or triple bonds are not preferred considering the risk of decomposition with UV radiations. Preferably the hydrocarbon does not contain any double or triple bonds, in which case the hydrocarbons are referred to as alkanes in the present specification.

The hydrocarbon may further comprise one or more heteroatoms, as substituants and/or as atoms or group of atoms interrupting the hydrocarbon chain and/or ring. Such heteroatoms include, but are not limited to, oxygen, sulfur, nitrogen, phosphor, halogens (mainly as fluorine, chlorine, bromine and/or iodine). Care should be taken that the presence of one or more heteroatom(s) does not impact the immiscibility of the two fluids.

May be used mixtures containing more than about 99.8 % of alkanes. These mixtures may contain little amount of aromatic groups and/or unsaturated moieties in a ratio lower than about 1 weight % (preferentially lower than about 0.5%). Chlorine may also be present in said alkane, in a ratio lower than about 10 weight %, preferentially lower than about 7%. Such impurities may be present as sub-product resulting from the preparation of the alkanes, e.g. when they are obtained by distillation process.

According to various features of the present invention, the hydrocarbon is or comprises:
- a linear or branched alkane, such as decane (C₁₀H₂₂), dodecane (C₁₂H₂₄), squalane (C₃₀H₆₂), and the like;
- an alkane comprising one or more rings, such as tert-butylcyclohexane (C₁₀H₂₀), and the like;
- a fused ring system, such as α-chloronaphthalene, α-bromonaphthalene, *cis,trans-*decahydronaphthalene (C₁₀H₁₈), and the like;
- a mixture of hydrocarbons, such as those available as Isopar^{®} V, Isopar^{®} P (from ExxonMobil); and the like;

In the present application, an oligomer is a compound having a number of identical (homo-oligomers) or different (co-oligomers) repeating units, of between about 2 and about 20, preferably between about 2 and about 10, and still more preferably between about 2 and about 5. Oligomers having more than 20 repeating units are less preferred since they may induce an undesirable increase of viscosity at low temperature.

The non-conductive fluid may contain one or several of the following Si-based species:
- a siloxane of the formula 1a, 1 b or 1 c: 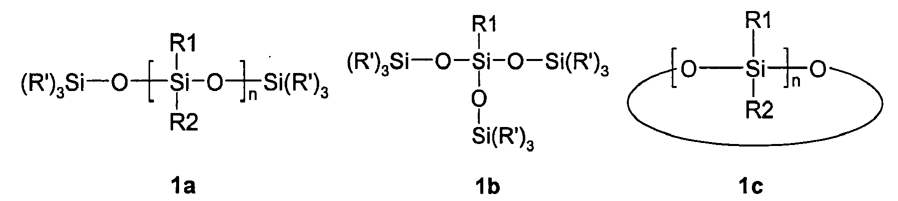 wherein each of R1, R2 and R' independently represents alkyl, (hetero)aryl, (hetero)arylalkyl, (hetero)arylalkenyl or (hetero)arylalkynyl and n is comprised between about 1 and about 20, preferably between about 1 and about 10, more preferably n is 1, 2, 3, 4 or 5 with the precision that n is greater than 2 in formula 1 c;
- a silane of formula 2: 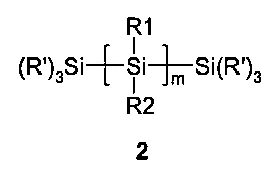 wherein R1, R2 and R' are as defined above and m is comprised between 1 and 20, preferably between about 1 and about 10, more preferably m is 1, 2 or 3;
- a monosilane of formula 3: 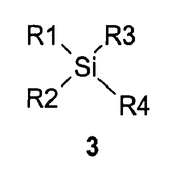 wherein R1 and R2 are as defined above, and each of R3 and R4 independently represents alkyl, (hetero)aryl, (hetero)arylalkyl, (hetero)arylalkenyl or (hetero)arylalkynyl.

In the above formulae:
- alkyl means a straight or branched alkyl radical having from about 1 to about 10 carbon atoms, preferably from about 1 to about 6 carbon atoms; preferred alkyl includes methyl, ethyl, *n*-propyl, *iso*-propyl; alkyl radical may be halogenated, for instance may comprise a 1,1,1-trifluopropyl group;
- (hetero)aryl means an aromatic or heteroaromatic radical containing from about 5 to about 12 atoms, forming at least one, preferably one, aromatic and/or heteroaromatic ring, said ring(s) being optionally substituted by one or more halogens, preferably 1, 2 or 3 halogen atoms (mainly fluorine, chlorine and/or bromine), and being optionally fused with one or more saturated, partially saturated or unsaturated ring system; preferred (hetero)aryl is phenyl or naphthyl, optionally substituted with 1, 2 or 3 halogen atoms;
- (hetero)arylalkyl is as defined above for each of the alkyl and (hetero)aryl radical; preferred (hetero)arylalkyls include benzyl, phenethyl, optionally substituted with 1, 2 or 3 halogen atoms;
- (hetero)arylalkenyl and (hetero)arylalkynyl correspond to radicals wherein the (hetero)aryl moiety is as defined above, and alkenyl and alkynyl represent a straight or branched alkyl radical, as defined above, further comprising one or more, preferably one, double bond or one or more, preferably one, triple bond, respectively.

According to a preferred embodiment, in the above formulae 1a, 1b and 2, all R' are identical or different and are preferably methyl or halogenated alkyls.

According to a further preferred embodiment, in the above formulae 1a, 1b and 2, all R' are the same, more preferably each R' is methyl.

The non-conductive fluid may contain one or several of the following specific Si-based species:
- hexamethyldisilane, diphenyldimethylsilane, chlorophenyltrimethylsilane, phenyltrimethylsilane,
- phenethyltris(trimethylsiloxy)silane, phenyltris(trimethylsiloxy)silane, polydimethylsiloxane, tetraphenyltetramethyltrisiloxane, poly(3,3,3-trifluoropropylmethylsiloxane), 3,5,7-triphenylnonamethylpentasiloxane, 3,5-diphenyloctamethyltetrasiloxane, 1,1,5,5-tetraphenyl-1,3,3,5-tetramethyltrisiloxane, and hexamethylcyclotrisiloxane.

The non-conductive fluid may contain one or several of the following germane based species:
- germanoxane of formula 4
- germane of formula 5
- germane of formula 6 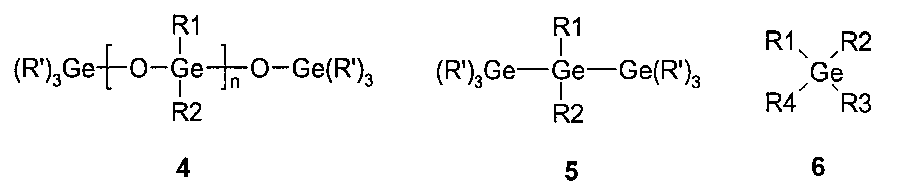
wherein R', R1, R2, R3, R4 and n are as defined above.

The non-conductive fluid may contain one or several of the following specific germane based species: hexamethyldigermane, diphenyldimethylgermane, phenyltrimethylgermane.

According to another feature, the non-conductive fluid comprises at least one Si- and/or Ge-based compound substituted by one or more phenyl groups and/or other groups like fluorinated or non fluorinated alkyl (ethyl, *n*-propyl, *n*-butyl), linear or branched alkyls, chlorinated or brominated phenyl groups, benzyl groups, halogenated benzyl groups; or a mixture of Si- and/or Ge-based compounds wherein at least one compound is substituted by one or more phenyl groups and/or other groups like fluorinated or non fluorinated alkyl (ethyl, *n*-propyl, *n*-butyl), linear or branched alkyls, chlorinated or brominated phenyl groups, benzyl groups, halogenated benzyl groups.

In a specific embodiment, the ratio of the total aryl, e.g. phenyl, radicals or groups carried by the Si-, Ge- and Si/Ge-compound(s) to the total of Si + Ge atoms is equal to or less than about 1.33, preferably than about 1, and more preferably than about 0.8.

Si and/or Ge-based oil containing a ratio of phenyl groups to Si+Ge atoms greater than about 1.33 can become hazy after thermal stress when they are in the presence of the aqueous conductive fluid. Turbidity value for such oils is usually higher than 1000 NTU. Using selected siloxanes or silanes where the weight ratio of phenyl groups to Si+Ge is equal to or less than about 1.33, preferably, less than about 1, and more preferably less than about 0.8, leads to a decrease of turbidity to less than about 200 NTU, which is an acceptable value for use in electrowetting devices, such as optical lenses.

According to another feature of the present invention, the non-conductive fluid comprises a wetting agent to increase the wettability of said fluid on the lower plate (isolating substrate) of the lens. The nature of the wetting agent will depend on the nature of the lower plate surface of said lens.

Still according to another feature, the organic or an inorganic (mineral) compound or mixture thereof that is the primary component of the non-conductive fluid may have itself wetting properties with respect to the substrate or the coating, or may comprise a component that has this property. The organic or an inorganic (mineral) compound may thus be itself the wetting agent when a specific substrate or coating is used.

Examples of organic or inorganic (mineral) compounds - and/or of wetting agents on Parylene or Cyclotene® or other non-conductive (isolating) layer or coating having a high surface energy (>30mN/m)-:

**Table 1**

| | **Density at 20°C (g/cm3)** | **refractive index at 589.3nm at 20°C** | **viscosity at 20°C (cSt)** | **Surface tension mN/m at 20°C** | **Contact angle on Parylene in CF1 (± 1°)** |
|---|---|---|---|---|---|
| 1-Bromononane | 1.0895 | 1.4545 | 1.93 | 28.69 | 5 |
| 1,2-Dibromohexane | 1.5812 | 1.5026 | 1.68 | 30.52 | 5 |
| Bromocyclohexane | 1.3347 | 1.4954 | 1.79 | 31.57 | 13 |
| 1-Chloro-2-methyl-2-phenylpropane | 1.0423 | 1.5244 | 3.25 | 34.36 | 8 |
| 1,9-Dichlorononane | 1.0102 | 1.4599 | 3.93 | 34.49 | 7 |
| 1,8-Dichlorooctane | 1.0261 | 1.4592 | 3.21 | 34.52 | 0 |
| 1,10-Dichlorodecane | 0.9966 | 1.4609 | 4.76 | 34.54 | 15 |
| Cycloheptylbromide | 1.3085 | 1.5045 | 2.41 | 35.05 | 12 |
| 1-Chloro-3-phenylpropane | 1.0478 | 1.5222 | 2.4 | 35.94 | 8 |
| 2-phenylethylbromide | 1.37 | 1.5573 | 2.31 | 37.69 | 0 |
| 1,8-Dibromooctane | 1.4657 | 1.4993 | 4.08 | 37.73 | 0 |
| 1-Bromo-3-phenylpropane | 1.3127 | 1.545 | 2.7 | 37.92 | 3 |
| 1,6-Dibromohexane | 1.608 | 1.5073 | 2.7 | 38.39 | 0 |
| 1,9-Dibromononane | 1.4115 | 1.4964 | 4.85 | 39 | 0 |
| 1,1,2-Tribromoethane | 2.61 | 1.593 | 1.63 | 43.16 | 0 |

**Table 2**

| | **density at 20°C (g/cm3)** | **refractive index at 589.3nm at 20°C** | **viscosity at 20°C (cst)** | **Surface tension at 20°C** | **Contact angle on Parylene in CF1 (± 1°)** |
|---|---|---|---|---|---|
| cyclohexylbenzene | 0.9424 | 1.5258 | 2.98 | 30.62 | 17 |
| 1,2-Dichlorobenzene | 1.3061 | 1.5514 | 1.13 | 31.56 | 7 |
| 1-chloro-2-fluorobenzene | 1.2405 | 1.5010 | 0.78 | 31.82 | 3 |
| 2-Chloro-1,4-dimethylbeNzene | 1.056 | 1.5235 | 1.04 | 31.9 | 0 |
| Chlorobenzene | 1.1066 | 1.5248 | 0.74 | 32.63 | 0 |
| 1-bromo-4-propylbenzene | 1.286 | 1.5363 | 1.55 | 33.15 | 0 |
| 1-bromo-4-ethylbenzene | 1.3395 | 1.5446 | 1.08 | 33.65 | 6 |
| Bromobenzene | 1.4964 | 1.5597 | 0.81 | 33.99 | 15 |
| 1-Phenyl-1-cyclohexene | 0.99 | 1.5684 | | 37.25 | 0 |
| Cyclopropyl phenyl sulfide | 1.0619 | 1.5823 | 2.7 | 38.43 | 2 |
| 4-Chlorodiphenyl ether | 1.1916 | 1.5885 | 4.69 | 39.13 | 9 |
| Thioanisole | 1.0584 | 1.5870 | 1.54 | 39.23 | 0 |
| Phenyl sulfide | 1.1123 | 1.6328 | 4.26 | 41.36 | 5 |
| 4-Bromodiphenyl ether | 1.4213 | 1.6082 | 5.88 | 42.12 | 6 |
| 2-Fluorobenzophenone | 1.1853 | 1.5856 | 17.83 | 42.44 | 14 |
| 1-Bromonaphtalene | 1.4889 | 1.6582 | 3.68 | 43.57 | 0 |
| 2-Bromothioanisole | 1.542 | 1.6338 | 3.32 | 44.58 | 12 |

**Table 3**

| | **density at 20°C (g/cm3)** | **refractive index at 589.3nm at 20°C** | **Contact angle on Parylene in CF1 (± 1°)** |
|---|---|---|---|
| Diphenyldimethylgermanium | 1.18 | 1.573 | 5 |

Examples of organic or inorganic (mineral) compounds - and/or of wetting agents on Teflon^{®} AF or Cytop® or other isolating layer or coating having a low surface energy (< 30mN/m):

**Siloxanes - Table 4**

| | **Density at 20°C (g/cm3)** | **Refractive index at 589.3nm at 20°C** | **Viscosity at 20°C (cSt)** | **Surface tension mN/m at 20°C** | **Contact angle on AF in CF1 (± 1°)** |
|---|---|---|---|---|---|
| 3,5-Diphenyloctamethyl-tetrasiloxane | 0.9759 | 1.4772 | 6.68 | 23.92 | 0 |
| Baysilone M 5 (Bayer) | 0.9162 | 1.3982 | 5.38 | 18.41 | 8.9 |
| Baysilone PK 20 (Bayer) | 0.9822 | 1.4609 | 21.46 | 22.05 | 10.6 |
| Siloxane DC200/0,65 (Dow Corning) | 0.7634 | 1.3772 | 0.57 | 15.57 | 0 |
| Siloxane DC200/10 (Dow Corning) | 0.9392 | 1.4010 | 10.73 | 18.38 | 6 |
| Siloxane DC200/5 (Dow Corning) | 0.9168 | 1.3980 | 5.58 | 18.61 | 7.2 |
| Siloxane DC702 (Dow Corning) | 1.0916 | 1.5181 | 62.21 | 28.45 | 15.3 |
| Siloxane DC FS1265 (Dow Corning) | 1.2509 | 1.3814 | 410.28 | 21.56 | 18.4 |
| DES T11 (ABCR) | 0.9468 | 1.433 | 6.32 | 23.85 | 0 |
| DMS-T02 (ABCR) | 0.8978 | 1.3955 | 3.29 | 18.2 | 9.8 |
| Hexamethyldisilane | 0.71 | 1.4226 | | 20.56 | 0 |
| PMM-0011 (ABCR) | 0.979 | 1.4806 | 6.45 | 23.32 | 0 |
| poly(dimethylsiloxane-co- diphenylsiloxane), 550 | 1.0643 | 1.4977 | 148.81 | 24.73 | 10.3 |
| poly(dimethylsiloxane-co-diphenylsiloxane), dihydroxy terminated | 1.0477 | 1.4717 | 71.27 | 21.89 | 6.7 |
| Rhodorsil 47V10 (Rhodia) | 0.9376 | 1.4007 | 10.59 | 19.16 | 10.2 |
| Rhodorsil 550 (Rhodia) | 1.068 | 1.5008 | 192.54 | 21.32 | 12.1 |
| Rhodorsil 604V50 (Rhodia) | 0.9623 | 1.4039 | 53.5 | 20.13 | 7.2 |
| SIB 1816,0 (ABCR) | 1.4772 | 1.3383 | 9.67 | 18.73 | 6.9 |
| FMS 121 | 1.224 | 1.381 | 125.58 | 21.73 | 11.7 |

**Others - Table 5**

| | **density at 20°C (g/cm³)** | **refractive index at 589.3nm at 20°C** | **viscosity at 20°C (cSt)** | **Surface tension mN/m at 20°C** | **Contact angle on AF in CF1 (±1°)** |
|---|---|---|---|---|---|
| 1,3,5-Triisopropylbenzene | 0.84 | 1.4886 | 4.88 | 26.87 | 0 |
| 1,3-Diisopropylbenzene | 0.8559 | 1.4887 | 1.69 | 27.28 | 0 |
| 1-bromo-2,5-difluorobenzène | 1.708 | 1.509 | | 25.75 | 2 |
| 1-bromo-4-butylbenzene | 1.2399 | 1.5301 | 1.95 | 23.59 | 19 |
| 1-Bromododecane | 1.0355 | 1.4580 | 3.83 | 27.65 | 0 |
| 1-chlorooctane | 0.873 | 1.4303 | 1.38 | 26.74 | 16 |
| 1-Chlorotetradecane | 0.8652 | 1.4468 | 5.11 | 29.62 | 0 |
| 2-bromododecane | 1.02 | 1.4576 | | 25.28 | 0 |
| cis,trans-decahydronaphtalene | 0.881 | 1.474 | 2.85 | 28.54 | 0 |
| Cyclohexane | 0.7786 | 1.4261 | 1.19 | 25 | 15 |
| Dodecane | 0.753 | 1.4218 | | 24.53 | 0 |
| Heptane | 0.684 | 1.3876 | 0.45 | 20.27 | 0 |
| Hexane | 0.6597 | 1.3748 | 0.3 | 18.05 | 0 |
| Isopar P | 0.8001 | 1.4442 | 4.18 | 25.24 | 0 |
| Nonane | 0.7178 | 1.4054 | 0.88 | 22.5 | 8 |
| Octane | 0.7029 | 1.3974 | 0.65 | 21.39 | 0 |
| o-xylene | 0.88 | 1.5048 | 0.91 | 26.94 | 8 |
| p-xylene | 0.8611 | 1.4958 | 0.72 | 27.6 | 14 |
| Undecane | 0.7406 | 1.4171 | 1.51 | 23.93 | 0 |
| 1,1,1,5,5,5-Hexafluoroacetylacetone | 1.47 | 1.3342 | | 14.74 | 0 |
| Bromopentafluorobenzene | 1.9442 | 1.4493 | 0.81 | 25.53 | 0 |
| Fluorinated HFE 7200 (3M) | 1.4338 | | 0.49 | 14.38 | 0 |
| FC-40 (3M) | 1.8839 | | 2.92 | 16.38 | 7 |
| FC-75 (3M) | 1.7735 | | 0.91 | 14.35 | 0 |
| Perfluoropolyether Galden HT230 (Solvaysolexis) | 1.8295 | | 5.79 | 15.49 | 0 |
| Perfluoropolyether Galden HT270 (Solvaysolexis) | 1.8612 | | 17.52 | 16.43 | 11 |
| 1-Fluorooctane | 0.8123 | 1.3959 | 0.96 | 23.77 | 0 |

The wetting agent may be a monohalogenated aromatic compound, a α,ω-dihalogenated alkyl compound or a mixture thereof. In a preferred embodiment, the non-conductive fluid comprises 1-bromo-4-ethylbenzene, α,ω-dichlorooctane or a mixture thereof as a wetting agent.

Among the wetting agents on Parylene or insulating layer having a high surface energy (> 30mN/m), those of formula (I) or of formula (II) or a mixture thereof are preferred: 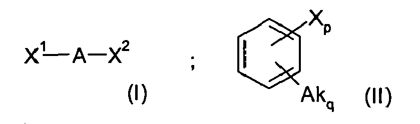 wherein:
- X, X¹ and X² are halogen atoms (mainly fluorine, chlorine and/or bromine);
- A is linear or branched (C₄-C₂₀)alkylene, optionally substituted by halogen atom(s), and optionally comprising one or more, preferably one, double bond, and/or one or more, preferably one, triple bond;
- Ak is C₁-C₁₀ alkyl, preferably C₁-C₆ alkyl, such as methyl, ethyl, propyl, and linear or branched butyls, pentyls and hexyls;
- p and q are each chosen from 1, 2, 3, 4 or 5, provided that p + q is 2, 3, 4, 5 or 6.

Preferably, X, X¹ and X² are independently Cl or Br. Ak preferably represents ethyl.

Examples of formula (I) include the compounds listed in Table 1. Examples of formula (II) include the compounds listed in Table 2.

Compounds of formula (I) and of formula (II) show a good resistance to hydrolysis when in contact with an aqueous conductive fluid, and are particularly suitable wetting agents.

In a preferred embodiment, the non-conductive fluid comprises α,ω-dichlorooctane as hydrolysis-resistant wetting agent.

In another preferred embodiment, the non-conductive fluid comprises 1-bromo-4-ethylbenzene as hydrolysis-resistant wetting agent.

The presence of halogenated groups in the non conductive fluid may help to decrease the natural contact angle. The one skilled in the art will find in the above-described components of the non-conductive fluid, a number of halogenated species and these species could be used by the one skilled in the art in the non-conductive fluid in order to adjust the natural contact angle in accordance with the invention.

One or more of the following features may also be included:
- the non-conductive fluid further comprises an anti-oxidant,
- the non-conductive fluid further comprises a biocide compound, which may be the same as, or different from, the biocide optionally present in the conductive fluid.

Among the wetting agents on Teflon^{®} AF or Cytop® or other isolating layer or coating having a low surface energy (<30mN/m) those of formula (III) or of formula (IV) or a mixture thereof are appropriate embodiments:
(III) Siloxane having a ratio of phenyl groups to silicon atom below 1
(IV) X³-Aₙ
X³ is a halogenated atom (preferably fluorine, chlorine or bromine) or a hydrogen
Aₙ is a hydrocarbon or a fluorinated hydrocarbon of n carbon atoms, n being comprised between about 6 and about 12.

Anti-oxidant compounds include those known by the one skilled in the art, and, for example, are of the BHT-type (butylated hydroxytoluene) anti-oxidants, such as 2,6-di-tert-butyl-4-methylphenol.

### The conductive fluid:

According to another feature, the electrical conductive fluid comprises water and at least one organic or inorganic ion, typically at least one organic or inorganic ionic or ionizable salt, or a mixture thereof, conferring conductive properties to said fluid.

In the following specification, "ionic salts" refers to salts that are totally or substantially totally dissociated (such as a bromine-anion and a cation) in water. "Ionizable salts" refers to salts that are totally or substantially totally dissociated in water, after chemical, physical or physico-chemical treatment.

Ions that are suitable in the present invention include both cations and anions, which may be simultaneously, but not necessarily, present together in the conductive fluid.

Examples of anions include, but are not limited to, halides, e.g. chloride, bromide, iodide, sulfate, carbonate, hydrogen carbonate, acetate, and the like, as well as mixtures thereof. Examples of cations include, but are not limited to, alkali, alkaline-earth and metallic cations.

Organic and inorganic ionic and ionizable salts are thus well known in the art, and examples of these include, but are not limited to potassium acetate, magnesium chloride, zinc bromide, lithium bromide, lithium chloride, calcium chloride, sodium sulfate, and the like, as well as mixtures thereof.

Mixtures of one or more ionic salts together with one or more ionizable salts are also encompassed by the present invention.

According to a particularly preferred embodiment of the present invention, the salt present in the conductive fluid is sodium sulfate, potassium acetate, zinc bromide, sodium bromide, or lithium bromide, and mixtures thereof, and more preferably, sodium sulfate, potassium acetate, or lithium bromide, and mixtures thereof.

As already mentioned, the conductive fluid comprises an organic or inorganic ionic or ionizable salt. Said salt is dissolved in water.

Water to be used in the conductive fluid should be as pure as possible, i.e. free, or substantially free, of any other dissolved components that could alter the optical properties of the electrowetting device, namely an optical lens driven by electrowetting. Ultra pure water is most preferably used.

The concentration of the dissolved salt in the conductive fluid may vary in large proportions, keeping in mind a too high concentration may result in undesirable increase of density, refractive index, turbidity, haze, or loss of transparency for the optical lens.

According to another feature, the electrical conductive fluid comprises at least one conventional freezing-point lowering agent. As freezing-point lowering agent, mention may be made of alcohol, glycol, glycol ether, polyol, polyetherpolyol and the like, or mixtures thereof. Examples thereof include the following agents: ethanol, ethylene glycol, monopropylene glycol (MPG or 1,2-propane diol), 1,3-propane diol, 1,2,3-propane triol (glycerol), and the like, and mixtures thereof.

According to still another feature, the conductive fluid comprises at least one viscosity-controlling agent, especially a viscosity lowering agent. The viscosity lowering agent that may be used in the invention may be of any type known from the one skilled in the art and may be advantageously an alcohol, a glycol, a glycol ether, a polyol, a poly ether polyol and the like, or mixtures thereof. Examples thereof include the following agents: ethanol, ethylene glycol, monopropylene glycol (MPG), 1,2,3-propane triol (glycerol), and the like, and mixtures thereof.

In a preferred embodiment, the viscosity lowering agent has a molecular weight of less than about 130 g/mol.

The viscosity lowering agent may be the same or different from the freezing-point lowering agent. According to a feature, the conductive fluid comprises an agent that is both a freezing-point lowering agent and a viscosity lowering agent.

According to still another feature, the conductive fluid advantageously comprises a biocide agent in order to prevent the development of organic elements, such as bacteria, fungi, algae, micro-algae, and the like, which could worsen the optical properties of the electrowetting device, particularly in the case of a lens driven by electrowetting. Such biocide agent may be of any type known in the art, provided, as is the case for the freezing-point lowering agent and the viscosity-lowering agent, that it does not alter the required optical properties of the conductive fluid (transparency, refractive index, and the like, as mentioned above). Biocide compounds include those usually known and used in the art, and for example 2-methyl-4-isothiazoline-3-one (MIT) and 1,2-benzisothiozoline-3-one (BIT).

A conventional anti-UV agent may be present in the conductive fluid, in the non-conductive fluid or in both fluids.

In the present specification, for either or both the conductive and non-conductive fluids, as well as for the electrowetting device, transparency is to be understood as a transmission of more than about 96% over a wavelength range of from about 400 nm to about 700 nm and/or a scattering energy of less than about 2% in an about 60° (degrees) cone around the direct incidence in the same wavelength range.

According to an embodiment, a multi-phase composition containing the non-conductive and the conductive fluids has a mean arithmetic cinematic viscosity of between about 1.5 cSt and about 40 cSt, preferably of between about 1.5 cSt and about 20 cSt, more preferably of between about 3 cSt and about 10 cSt, within a temperature range of about -10°C to about +60°C, preferably of about -20°C to about +60°C, more preferably of about -20°C to about +70°C.

In the present application, the cinematic viscosity is measured following ASTM D7042-04. The resistance of the liquid between a rotor and a stator is determined at the determined temperature, e.g. at -10°C, -20°C, +60°C or +70°C and/or at intermediate values within the range of temperature comprised between -10°C, -20°C and +60°C or +70°C. A viscometer of the type of Anton Paar SVM 3000 may be used, and reference is made to EP-B1-0 926 481. The content of these documents is hereby incorporated herein by reference. The mean arithmetic cinematic viscosity is the mathematic mean of the cinematic viscosities measured separately for the conductive and non-conductive fluids using the above method.

According to another feature, the difference of viscosity between the conductive fluid and the non-conductive fluid is comprised between 0 cSt and about ±10 cSt, preferentially between 0 cSt and about ±5 cSt, within a temperature range of about -10°C to about +60°C, preferably of about -20°C to about +60°C, more preferably of about -20°C to about +70°C.

According to another feature, the non-conductive fluid and the conductive fluid have substantially the same density. This means it is acceptable that the difference of densities may vary within a short range. Typically, it is preferred the difference of densities is not more than about 3.10⁻³ g/cm³ at 20°C.

According to another feature, the non-conductive fluid and the conductive fluid are transparent (as defined above) and each have a refractive index different from the other. The difference of refractive index of the two fluids advantageously ranges from about ±0.03 to about ±0.8, preferably from about ±0.04 to about ±0.6, more preferably from about ±0.06 to about ±0.3.

In a preferred embodiment, the refractive index of the non-conductive fluid is greater than the refractive index of the conductive fluid.

In another aspect, the invention is related to an electrowetting lens containing an electrowetting device according to the invention. In a feature, the lens comprises means to apply an A.C. voltage to the conductive fluid.

This lens may be used or be part of a variable focus liquid lens, an optical diaphragm, an optical zoom, an ophthalmic device, an electrowetting aperture and any other optical device using electrowetting.

In still another aspect, the invention is related to a set or to an apparatus comprising an electrowetting lens containing an electrowetting device according to the invention, and a driver or similar electronic means for controlling the lens. In an embodiment, a lens and the driver or similar electronic means are integrated in the apparatus. In another embodiment, the apparatus comprises several (more than one) lens(es) and at least one driver or similar electronic means. According to a feature, the apparatus comprises means to apply an A.C. voltage to the conductive fluid. The apparatus may be a camera, a cell phone, an endoscope, a telemeter, a dental video.

The present invention will now be described in further details by way of non-limiting examples and by reference to the attached drawings.
Figure 1 is a simplified cross-section view of a variable-focus liquid lens according to the invention.
Figure 2 represents a graph illustrating undesirable focal hysteresis in a liquid lens.
Figure 3 is a schematic description of the natural angle of a non conductive liquid on a surface in presence of a conductive liquid.
Figure 4 is a graph showing the contact angle of numerous non conductive liquids on Parylene C, depending on the surface tension, in presence of a conductive fluid having a surface tension γ_{L} =44±1 mN/m.
Figure 5 is a graph showing the contact angle of numerous non conductive liquids on Teflon^{®} AF depending on the surface tension, in presence of a conductive fluid having a surface tension γ_{L} =44±1mN/m.
Figure 6 is a graph showing the relation between substrate polarity (mN/m) and contact angle for a non conductive liquid (γ =25±1mN/m) in presence of a conductive fluid (γ =44±1mN/m).
Figure 7 is a graph showing the maximum contact angle hysteresis on Parylene C depending on natural contact angle, measured between the natural contact angle and above 60°.
Figure 8 is a graph showing an improved focal hysteresis in a liquid lens according to the invention.

Fig. 1 shows a simplified cross-section view of a variable-focus liquid lens, formed in a dielectric transparent enclosure 2 filled with a conductive liquid 5. Dielectric 2 has a low wettability with respect to conductive liquid 5. A lower wall or plate of the enclosure 2 includes a hollow 9, centered around an axis Δ perpendicular to this plate. Hollow 9 is a truncated cone. A drop of non-conductive liquid 4 is placed in hollow 3. Liquid drop 4 naturally takes a position A centered on axis Δ. Non-conducting liquid 4 and conductive liquid 5 are both transparent, non-miscible, they have different optical indexes and have substantially the same density. The dioptre formed between liquids 4 and 5 forms a surface of a liquid lens, the optical axis of which is axis Δ and the other surface of which corresponds to the contact between the drop and the bottom of the hollow. An electrode 7 is placed on the external surface of dielectric enclosure 2. Reference numeral 9 indicates a glass wall. An electrode 8 is in contact with conductive liquid 5. A voltage source (not shown) enables applying an A.C. voltage V between electrodes 7 and 8.

Voltage V may be increased from 0 volt to a maximum voltage, which depends on the used materials. When the voltage increases, non-conducting liquid drop 4 deforms to reach a limiting position (designated as B). While drop 4 deforms from its position A (rest position, without tension, concave interface with conductive fluid 5) to its position B (convex interface with conductive fluid 5), the focus of the liquid lens varies.

### Experimental studies:

Figure 2 shows the experimental measured focal length of a liquid lens as a function of the voltage applied. As it appears from Figure 2, the focal length of the lens is different depending on voltage ramp direction. Hysteresis in focal is around 2.5 m⁻¹, representing a 10V voltage hysteresis.

The natural contact angle 105 (see Figure 3) in this lens was above 20°.

More generally, in any application using electrowetting, such a hysteresis implies that device has two characteristics for the same input command, drastically complicating the entire driving process. Reducing hysteresis is consequently a way to facilitate the driving process of the device as well as an improvement of the liquid lenses optical quality.

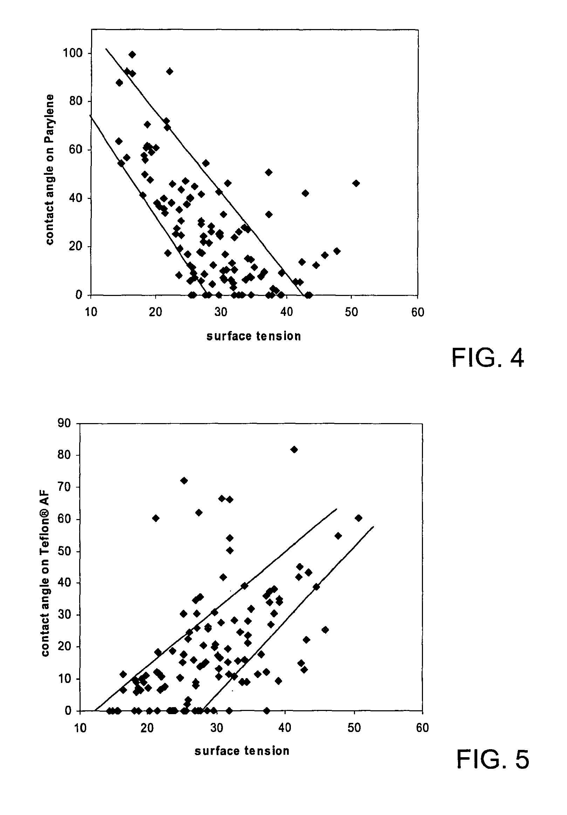

Figure 4: Numerous non-conductive fluids have been deposited on a Parylene C coating in presence of a conductive fluid having a surface tension of 44±1mN/m. Natural contact angles have been measured and plotted depending on the non-conductive fluid surface tension. It is noticeable that non-conductive fluids having a surface tension above 28mN/m present a low natural contact angle, in accordance with the present invention.

Figure 5: Similarly, the same non-conductive fluids have been deposited on a Teflon^{®} AF AF1601 coating in presence of a conductive fluid having a surface tension of 44±1mN/m. Natural contact angles have been measured and plotted depending on the non-conductive below 28mN/m present a low natural contact angle, in accordance with the present invention.

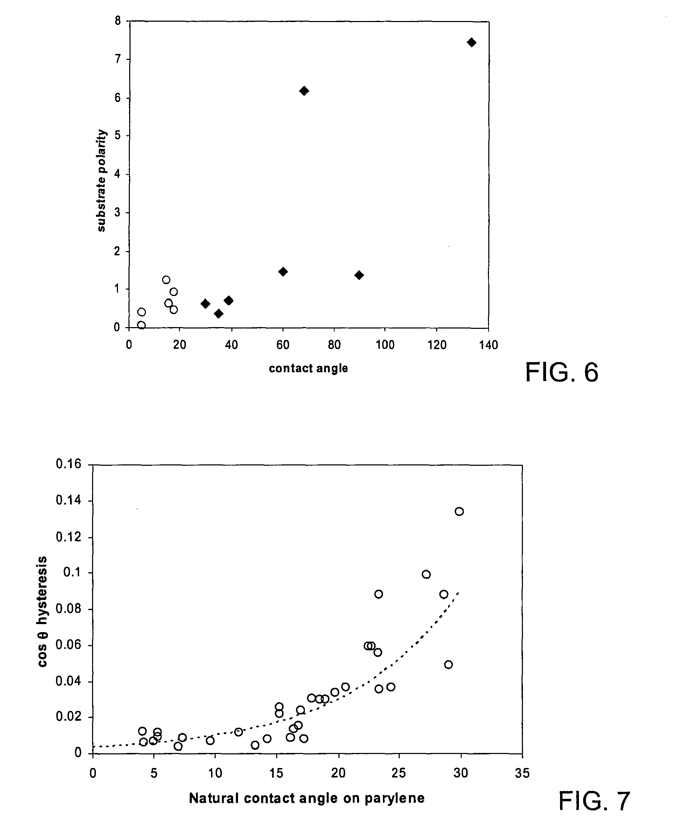

Figure 6: Natural contact angle have been measured on various coatings using a non conductive liquid having a surface tension of 25mN/m surrounded by a conductive fluid CF1 (see table 6) having a surface tension of 44mN/m.

**Table 6 : conductive fluid CF1 and non-conductive fluid NCF1**

| **Conductive fluid CF1** | |
|---|---|
| ***Compound*** | ***% in weight*** |
| Water | 33.77% |
| Na₂SO₄ | 0.2% |
| 1,2-Propane diol | 43.8% |
| 1,2,3-Propane triol | 22.2% |
| Acticid molecule (RS from Thor) | 0.03% |

| **Non-conductive fluid NCF1** | |
|---|---|
| ***Compound*** | ***% in weight*** |
| SIP 6827.0 | 35% |
| DC 704 | 25.1 % |
| DC 702 | 15% |
| DC 705 | 5% |
| 1,6-dibromohexane | 19.9% |

| | **Density at 25°C** | **Surface tension (mN/m)** | **viscosity at 25°C (cSt)** | **Refractive index** |
|---|---|---|---|---|
| CF1 | 1.0869 | 43.5 | 13.5 | 1.4115 |
| NCF1 | 1.088 | 23 | 9.3 | 1.4985 |

It comes from Figure 6 that the coatings with low surface polarity present the lower contact angles.

Figure 7: Maximum contact angle hysteresis has been measured on a 5.0±0.5 µm thick Parylene C substrate using a non-conductive liquid having a surface tension of 25 mN/m surrounded by the conductive fluid CF1 having a surface tension of 44 mN/m (see table 4), with an applied voltage varying between 0 and 60V.

Lens focal is given by the relation 1/f = Δn/R with R the curvature of the radius of the liquid meniscus and Δn the refractive index difference between both fluids. Radius R is geometrically related to contact angle through a complex function depending on lens geometry and liquid filling. In the present design, focal is roughly proportional to 1/f ≈50 Cosθ. Taking into account that depth of field for such device is typically 2m⁻¹, hysteresis specification is chosen not to exceed this value, i.e. ΔCosθ < 0.04. Based on that, it has been determined that the non-conductive fluid should advantageously spread with a natural contact angle equal or below 20° and preferably equal or below 16.

### Composition examples

### Multi-phase liquid compositions

All % are by weight. All characteristics are measured at 20°C.

### Composition 1:

| **Non-conductive fluid** | | **Conductive fluid** | |
|---|---|---|---|
| **Compound** | **Amount** | **Compound** | **Amount** |
| T23 | 20% | water | 54.65% |
| DC 702 | 54.4% | Na₂SO₄ | 0.2% |
| 1,8-dichlorooctane | 25% | MPG | 45% |
| BHT | 0.6% | Acticide^{®} MBS | 0.15% |
| d (g/cm³): 1.0386 | | d (g/cm³): 1.0369 | |
| n: 1.4860 | | n: 1.3840 | |
| Δd (g/cm³): | | 0.0017 | |
| Δn: | | 0.102 | |
| Average viscosity (cSt): | | 7.4597 | |

### Composition 2:

| **Non-conductive fluid** | | **Conductive fluid** | |
|---|---|---|---|
| **Compound** | **Amount** | **Compound** | **Amount** |
| SIP 6827 | 20% | water | 39.65% |
| DC702 | 59. 4% | Na₂SO₄ | 0.2% |
| 1,8-dichlorooctane | 20% | MPG | 60% |
| BHT | 0.6% | Acticide^{®} MBS | 0.15% |
| d (g/cm³): 1.0416 | | d (g/cm³): 1.0439 | |
| n: 1.0489 | | n: 1.3995 | |
| Δd (g/cm³): | | 0.0023 | |
| Δn: | | 0.0895 | |
| Average viscosity (cSt): | | 10.33 | |
| Contact angle θₙ (°) on Parylene C: | | 14 | |

### Composition 3:

| **Non-conductive fluid** | | **Conductive fluid** | |
|---|---|---|---|
| **Compound** | **Amount** | **Compound** | **Amount** |
| SIP 6827 | 20% | water | 40% |
| DC702 | 60% | Na₂SO₄ | 0.2% |
| 1,8-dichlorooctane | 20% | MPG | 60% |
| | | | |
| d (g/cm³): 1.0423 | | d (g/cm³): 1.0434 | |
| n: 1.4875 | | n: 1.3995 | |
| Δd (g/cm³): | | 0.0011 | |
| Δn: | | 0.088 | |
| Average viscosity (cSt): | | 10.25 | |

### Composition 4:

| **Non-conductive fluid** | | **Conductive fluid** | |
|---|---|---|---|
| **Compound** | **Amount** | **Compound** | **Amount** |
| SIP 6827 | 16.4% | LiBr | 1.5% |
| DC702 | 58% | water | 53.35% |
| 1,8-dichlorooctane | 25% | MPG | 45% |
| BHT | 0.6% | Acticide^{®} MBS | 0.15% |
| d (g/cm³): 1.0448 | | d (g/cm³): 1.0464 | |
| n: 1.4905 | | n: 1.3870 | |
| γ mN/m: 26.34 | | γ mN/m: 45.94 | |
| Δd (g/cm³): | | 0.0016 | |
| Δn: | | 0.1035 | |
| Average viscosity (cSt): | | 7.9 | |
| Contact angle θₙ (°) on Parylene C: | | 10.2 | |

### Composition 5:

| **Non-conductive fluid** | | **Conductive fluid** | |
|---|---|---|---|
| **Compound** | **Amount** | **Compound** | **Amount** |
| Isopar^{®} V | 49.3% | AcOK 20% | 75% |
| o-bromoethylbenzene | 50.7% | Ethanol | 25% |
| | | | |
| d (g/cm³): 1.0224 | | d (g/cm³): 1.0270 | |
| n: 1.4880 | | n: 1.3672 | |
| Δd (g/cm³): | | 0.0046 | |
| Δn: | | 0.1208 | |
| Average viscosity (cSt): | | 3.5 | |
| Contact angle θₙ (°) on Parylene C: | | < 5 | |

### Composition 6:

| **Non-conductive fluid** | | **Conductive fluid** | |
|---|---|---|---|
| **Compound** | **Amount** | **Compound** | **Amount** |
| Isopar^{®} V | 19% | Water | 53.85% |
| Chlorooctane | 19.4% | LiBr | 6% |
| p-bromoethylbenzene | 61 % | Ethylene Glycol | 20% |
| BHT | 0.6% | MPG | 20% |
| | | Acticide^{®} MBS | 0.15% |
| d (g/cm³): 1.0893 | | d (g/cm³): 1.0889 | |
| n: 1.4915 | | n: 1.3870 | |
| Δd (g/cm³): | | 0.0004 | |
| Δn: | | 0.1045 | |
| Average viscosity (cSt): | | 2.8 | |
| Contact angle θₙ (°) on Parylene C: | | 10.2 | |

### Composition 7:

| **Non-conductive fluid** | | **Conductive fluid** | |
|---|---|---|---|
| **Compound** | **Amount** | **Compound** | **Amount** |
| Isopar^{®} V | 35.2% | Water | 53.865% |
| p-bromoethylbenzene | 64.2% | LiBr | 5.985% |
| BHT | 0.6% | Ethylene Glycol | 20% |
| | | MPG | 20% |
| | | Acticide^{®} MBS | 0.15% |
| d (g/cm³): 1.0890 | | d (g/cm³): 1.0889 | |
| n: 1.5010 | | n: 1.3870 | |
| Δd (g/cm³): | | 0.0001 | |
| Δn: | | 0.1140 | |
| Average viscosity (cSt): | | 3.2 | |

### Composition 8:

| **Non-conductive fluid** | | **Conductive fluid** | |
|---|---|---|---|
| **Compound** | **Amount** | **Compound** | **Amount** |
| DC702 | 65% | Water | 47% |
| 1,8-dichlorooctane | 35% | Na₂SO₄ | 0.2% |
| | | EG | 53% |
| d (g/cm³): 1.0696 | | d (g/cm³): 1.0704 | |
| n: 1.4965 | | n: 1.3865 | |
| Δd (g/cm³): | | 0.0008 | |
| Δn: | | 0.110 | |
| Average viscosity (cSt): | | 7.7 | |
| Contact angle θₙ (°) on Parylene C: | | 15.1 | |

### Composition 9:

| **Non-conductive fluid** | | **Conductive fluid** | |
|---|---|---|---|
| **Compound** | **Amount** | **Compound** | **Amount** |
| SIP 6827 | 20% | Water | 40% |
| DC702 | 60% | Na₂SO₄ | 0.2% |
| 1,8-dichlorooctane | 20% | MPG | 60% |
| d (g/cm³): 1.0488 | | d (g/cm³): 1.0438 | |
| n: 1.4880 | | n: 1.399 | |
| Δd (g/cm³): | | 0.0013 | |
| Δn: | | 0.0881 | |
| Average viscosity (cSt): | | 10.3 | |
| Contact angle θₙ (°) on Parylene C: | | 14 | |

### Composition 10:

| **Non-conductive fluid** | | **Conductive fluid** | |
|---|---|---|---|
| **Compound** | **Amount** | **Compound** | **Amount** |
| p-bromopropylbenzene | 68% | Water | 49.2 |
| Isopar^{®} V | 32% | AcOK | 10.8% |
| | | MPG | 40% |
| d (g/cm³): 1.0846 | | d (g/cm³): 1.0844 | |
| n: 1.50 | | n: 1.3915 | |
| Δd (g/cm³): | | 0.0002 | |
| Δn: | | 0.1085 | |
| Average viscosity (cSt): | | 4.25 | |
| Contact angle θₙ (°) on Parylene C: | | 12 | |

### Composition 11:

| **Non-conductive fluid** | | **Conductive fluid** | |
|---|---|---|---|
| **Compound** | **Amount** | **Compound** | **Amount** |
| hexamethyldigermanium | 35% | water | 46.8% |
| Isopar V | 15% | AcOK | 2.88% |
| 1.8 dichlorooctane | 50% | EG | 37% |
| | | Ethanol | 15% |
| d (g/cm³): 1.0331 | | d (g/cm³): 1.0329 | |
| n: 1.4595 | | n: 1.3820 | |
| Δd (g/cm³): | | 0.0002 | |
| Δn: | | 0.0775 | |
| Average viscosity (cSt): | | 3.2994 | |
| Contact angle θₙ (°) on Parylene C: | | 8.6 | |

### Composition 12:

| **Non-conductive fluid** | | **Conductive fluid** | |
|---|---|---|---|
| **Compound** | **Amount** | **Compound** | **Amount** |
| SID 4556 | 40% | water | 48% |
| 1-bromononane | 60% | AcOK20% | 2% |
| | | MPG | 50% |
| d (g/cm³): 1.0411 | | d (g/cm³): 1.0399 | |
| n: 1.4640 | | n: 1.3985 | |
| Δd (g/cm³): | | 0.0012 | |
| Δn: | | 0.0655 | |
| Average viscosity (cSt): | | 4.55 | |

### Composition 13:

| **Non-conductive fluid** | | **Conductive fluid** | |
|---|---|---|---|
| **Compound** | **Amount** | **Compound** | **Amount** |
| PMM11 | 70% | water | 46.8% |
| o-bromoethylbenzene | 30% | AcOK20% | 1.2% |
| | | EG | 52% |
| d (g/cm³): 1.0691 | | d (g/cm³): 1.0686 | |
| n: 1.4970 | | n: 1.3857 | |
| Δd (g/cm³): | | 5 10⁻⁴ | |
| Δn: | | 0.111 | |
| Average viscosity (cSt): | | 3.74 | |
| Contact angle θₙ (°) on Parylene C: | | 6 | |

### Composition 14:

| **Non-conductive fluid** | | **Conductive fluid** | |
|---|---|---|---|
| **Compound** | **Amount** | **Compound** | **Amount** |
| SID 4556 | 100% | water | 55% |
| | | AcOK20% | 20% |
| | | Ethanol | 25% |
| d (g/cm³): 0.979 | | d (g/cm³): 0.9803 | |
| n: 1.4774 | | n: 1.3515 | |
| Δd (g/cm³): | | 1.3 10⁻³ | |
| Δn: | | 0.1260 | |
| Average viscosity (cSt): | | 4.74 | |
| Contact angle θₙ (°) on Parylene C: | | 13.3 | |
| Contact angle θₙ (°) on Teflon^{®} AF1601: | | 12.9 | |

### Composition 15:

| **Non-conductive fluid** | | **Conductive fluid** | |
|---|---|---|---|
| **Compound** | **Amount** | **Compound** | **Amount** |
| DC 702 | 59% | water | 47% |
| 1-bromodecane | 41% | Na₂SO₄ | 0.2% |
| | | Ethylene Glycol | 53% |
| d (g/cm³): 1.0687 | | d (g/cm³): 1.0688 | |
| n: 1.4935 | | n: 1.3863 | |
| Δd (g/cm³): | | 10⁻⁴ | |
| Δn: | | 0.1072 | |
| Average viscosity (cSt): | | 7.67 | |
| Contact angle θₙ (°) on Parylene C: | | < 5 | |

### Composition 16:

| **Non-conductive fluid** | | **Conductive fluid** | |
|---|---|---|---|
| **Compound** | **Amount** | **Compound** | **Amount** |
| SIP 6827 | 18% | water | 39.8% |
| DC702 | 52% | Na₂SO₄ | 0.2% |
| 1-bromododécane | 30% | MPG | 60% |
| d (g/cm³): 1.0459 | | d (g/cm³): 1.0424 | |
| n: 1.4861 | | n: 1.399 | |
| Δd (g/cm³): | | 0.0035 | |
| Δn: | | 0.0871 | |
| Average viscosity (cSt): | | 9.17 | |
| Contact angle θₙ (°) on Parylene C: | | 6 | |

### Composition 17:

| **Non-conductive fluid** | | **Conductive fluid** | |
|---|---|---|---|
| **Compound** | **Amount** | **Compound** | **Amount** |
| PMM11 | 43% | water | 48% |
| 1-bromononane | 57% | AcOK20% | 2% |
| | | MPG | 50% |
| d (g/cm³): 1.0395 | | d (g/cm³): 1.0399 | |
| n: 1.4662 | | n: 1.3895 | |
| Δd (g/cm³): | | 4 10⁻⁴ | |
| Δn: | | 0.0769 | |
| Average viscosity (cSt): | | 4.76 | |

### Composition 18:

| **Non-conductive fluid** | | **Conductive fluid** | |
|---|---|---|---|
| **Compound** | **Amount** | **Compound** | **Amount** |
| DC 702 | 54% | water | 25% |
| 1,8-dichlorooctane | 46% | AcOK20% | 25% |
| | | MPG | 50% |
| d (g/cm³): 1.0622 | | d (g/cm³): 1.0616 | |
| n: 1.4895 | | n: 1.3953 | |
| Δd (g/cm³): | | 6 10⁻⁴ | |
| Δn: | | 0.0942 | |
| Average viscosity (cSt): | | 7.92 | |
| Contact angle θₙ (°) on Parylene C: | | 7.6 | |
| Contact angle θₙ (°) on Teflon^{®} AF1601: | | 16.1 | |

### Composition 19:

| **Non-conductive fluid** | | **Conductive fluid** | |
|---|---|---|---|
| **Compound** | **Amount** | **Compound** | **Amount** |
| PMM11 | 10% | eau | 30% |
| DC702 | 30% | AcOK20% | 10% |
| 1-bromononane | 60% | EG | 40% |
| | | MPG | 20% |
| d (g/cm³): 1.0791 | | d (g/cm³): 1.0755 | |
| n: 1.4758 | | | |
| Δd (g/cm³): | | 0.0036 | |
| Average viscosity (cSt): | | 5.10 | |
| Contact angle θₙ (°) on Parylene C: | | 13 | |

### Composition 20:

| **Non-conductive fluid** | | **Conductive fluid** | |
|---|---|---|---|
| **Compound** | **Amount** | **Compound** | **Amount** |
| SIP 6827 | 49% | water | 14% |
| DC702 | 51% | AcOK20% | 56% |
| | | Ethanol | 25% |
| d (g/cm³): 1.0095 | | d (g/cm³): 1.0091 | |
| Δd (g/cm³): | | 4 10⁻⁴ | |
| Average viscosity (cSt): | | 7.91 | |
| Contact angle θₙ (°) on Parylene C: | | 8.1 | |

| **Si- and or Ge-based compound** | **Ratio Ph/Si** | **Ratio Ph/Me** |
|---|---|---|
| SIP 6827.0^{®} (ABCR GmbH, Phenyltris(trimethylsiloxy)silane) | 0.25 | 0.11 |
| PMM-011 (750-FTF-EX^{®}, 3M; Poly(phenylmethylsiloxane) | | |
| SID 4556 (ABCR GmbH, 3,5-Diphenyloctamethyltetrasiloxane) | 0.5 | 0.25 |
| SIT 8662 (ABCR GmbH, 3,5,7-Triphenylnonamethylpentasiloxane) | 0.6 | 0.33 |
| DC 705^{®} (Dow Corning, Trimethyl pentaphenyl trisiloxane) | 1.66 | 1.66 |
| PDM 7040^{®} (Gelest, 1,1,5,5-Tetraphenyl-1,3,3,5-tetramethyl trisiloxane | 1.33 | 1 |
| PSDF 04^{®} (1,1,5,5-tetraphenyl-1,3,3,5-tetramethyltrisiloxane) | 1.33 | 1 |
| DC 704^{®} (Dow Corning, Tetramethyl tetraphenyl trisiloxane) | 1.33 | 1 |
| SIP 6719.5^{®} (ABCR Gmbh, 1,1,3,5,5-Pentaphenyl-1,3,5-trimethyl siloxane) | 1.66 | 1,66 |
| DC 702^{®} (mixture of cyclosiloxane and phenylated siloxanes, Dow Corning) | > 1.33 | > 1.33 |

### Embodiment examples:

Embodiment example 1: A liquid lens as represented on Figure 1 has been made using Parylene C as an insulator as well as a hydrophobic coating on the lower plate and recess of the isolating substrate.

### Non-conductive fluid:

| | |
|---|---|
| 35.2% | Isopar V |
| 64.2% | p-bromoethylbenzene |
| 0.6% | BHT |

### Conductive fluid:

| | |
|---|---|
| 53.865% | Water |
| 5.985% | LiBr |
| 0.15% | Biocide |
| 20% | Ethylene glycol |
| 20% | 1,2 propane diol |

Natural contact angle with Parylene C: below 16°.

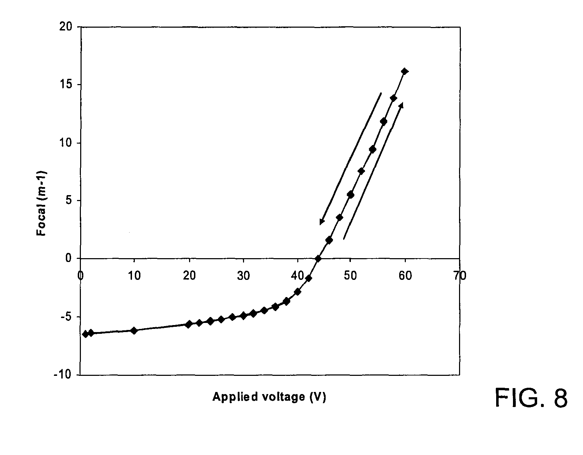

On Figure 8, focal has been plotted as a function of voltage for the lens. The focal was almost undistinguishable, whether voltage is increasing or decreasing.

Embodiment example 2: Same as embodiment example 1 with Parylene C coating is replaced by Parylene N.

Embodiment example 3: A liquid lens as represented on Figure 1 has been made using Teflon^{®} AF 1601 as a hydrophobic layer on top of Parylene C as an insulator on the lower plate and recess of the isolating substrate.

### Conductive fluid: same as in embodiment example 1

### Non-conductive fluid:

| | |
|---|---|
| 35.2% | Isopar V |
| 64.2% | p-bromoéthylbenzene |
| 0.6% | BHT |

Natural contact angle with Teflon^{®} AF: below 16°

Low contact angle hysteresis was also observed.

Embodiment example 4: Same as embodiment example 3 with Teflon^{®} AF AF1601 coating replaced by Teflon^{®} AF AF1600.

## Claims

1. An electrowetting device comprising a conductive fluid (101) and a non-conductive fluid (102), said fluids being non miscible, and an isolating substrate (103) on which both fluids are in contact and form a triple interface (104), wherein the natural contact angle (105) of the non-conductive fluid on the substrate in presence of the conductive fluid is comprised between 0° and about 20°.

2. The electrowetting device of claim 1, wherein the natural contact angle (105) is comprised between above 0° and less or equal to about 20°.

3. The electrowetting device of claim 1, wherein the natural contact angle (105) is comprised between about 5° and about 16°.

4. The electrowetting device of any one of the preceding claims, wherein the natural contact angle is kept within the recited range, over a range of temperature comprised between about -20°C and about +70°C.

5. The electrowetting device of any one of the preceding claims, wherein the difference between the surface tension of the non-conductive fluid and the surface energy of the isolating substrate material is ≤± about 15 mN/m

6. The electrowetting device of claim 5, wherein the difference between the surface tension of the non-conductive fluid and the surface energy of the isolating substrate material is ≤± about 12 mN/m.

7. The electrowetting device of any one of the preceding claims, wherein the isolating substrate material or a substrate coating material has a polar component comprised between 0 and about 4 mN/m.

8. The electrowetting device of claim 7, wherein the polar component is comprised between 0 and about 2 mN/m.

9. The electrowetting device of any one of the preceding claims, wherein the substrate material or a substrate coating material has a surface energy above about 30 mN/m.

10. The electrowetting device of claim 9, wherein the substrate material or a substrate coating material comprises a poly-para-xylylene linear polymer.

11. The electrowetting device of claim 10, wherein the substrate material or a substrate coating material comprises Parylene or Cyclotene®.

12. The electrowetting device of claim 10, wherein the substrate material or a substrate coating material comprises Parylene C or Parylene N.

13. The electrowetting device of ay one of claims 10 to 12, wherein the non-conductive fluid contains a compound of surface tension equal or above about 28 mN/m.

14. The electrowetting device of any one of the claims 1 to 8, wherein the substrate material or a substrate coating material has a surface energy below about 30 mN/m

15. The electrowetting device of claim 14, wherein the substrate material or a substrate coating material comprises a fluorinated polymer.

16. The electrowetting device of claim 15, wherein the substrate material or a substrate coating material comprises Teflon^{®} or Cytop®.

17. The electrowetting device of claim 15, wherein the substrate material or a substrate coating material comprises Teflon^{®} AF1601 or AF1600.

18. The electrowetting device of any one of claims 15 to 17, wherein the non-conductive fluid contains a compound of surface tension equal or below about 28 mN/m.

19. The electrowetting device of any one of the preceding claims, wherein the whole of the non-conductive and the conductive fluids has a mean arithmetic cinematic viscosity of between about 1.5 cSt and about 40 cSt, within a temperature range of about -10°C to about +60°C, preferably of about -20°C to about +60°C, more preferably of about -20°C to about +70°C.

20. An electrowetting lens containing an electrowetting device according to any one of the preceding claims.

21. The electrowetting lens of claim 20 that is or is included in, a variable focus liquid lens, an optical diaphragm, an optical zoom, an ophthalmic device, an electrowetting aperture.

22. An apparatus comprising an electrowetting lens according to claim 18 and a driver or electronic means for controlling the lens.

23. The apparatus of claim 22, which is a camera, a cell phone, a telemeter, an endoscope or a dental video.
